# EUROPÄISCHE PATENTANMELDUNG

(11) **EP 4 212 358 A1**
(43) Veröffentlichungstag der Anmeldung: **19.07.2023**
(21) Anmeldenummer: 22213648.3
(22) Anmeldetag: 14.12.2022
(51) Int. Cl.: B60C 9/07, B60C 9/17, B60C 17/00

(54) **FAHRZEUGLUFTREIFEN**

(30) Priorität: 14.01.2022 DE 102022200392
(71) Anmelder: Continental Reifen Deutschland GmbH, 30165 Hannover (DE)
(72) Erfinder: Berger, Christoph, 30165 Hannover (DE); Ahmed, Owais, 30165 Hannover (DE); Funk-Friedek, Sascha, 30165 Hannover (DE)
(74) Vertreter: Continental Corporation

(57) **Zusammenfassung**

Die Erfindung betrifft einen Fahrzeugluftreifen (1), aufweisend:
a) eine Reifenkarkasse (4) mit einem ersten Seitenbereich (5), einem zweiten Seitenbereich (6) und einem dazwischen angeordneten Zentralbereich (7), aufweisend zumindest eine Karkasslage (8) mit einer Vielzahl von gummierten Festigkeitsträgern (9), die sich jeweils durch den ersten Seitenbereich (5), den zweiten Seitenbereich (6) und den Zentralbereich (7) der Reifenkarkasse (4) erstrecken,
b) einen relativ zur Reifenkarkasse (4) radial weiter außen liegenden Laufstreifen (10),
c) eine relativ zur Reifenkarkasse (4) radial weiter innen liegende Reifeninnenschicht (11),

wobei zumindest ein Teil der gummierten Festigkeitsträger (9) der Karkasslage (8) bezogen auf die Umfangsrichtung (3) im ersten Seitenbereich (5) und im zweiten Seitenbereich (6) einen Winkel (14) im Bereich von 80° bis 90° einschließt und im Zentralbereich (7) einen Winkel (15) im Bereich von 5° bis 75° einschließt
dadurch gekennzeichnet, dass zwischen der Reifenkarkasse (4) und der Reifeninnenschicht (11) eine Stützvorrichtung (13) angeordnet ist.

## Beschreibung

Die Erfindung betrifft einen Fahrzeugluftreifen.

Die Erfindung geht aus von einem Fahrzeugluftreifen, aufweisend:
a) eine Reifenkarkasse mit einem ersten Seitenbereich, einem zweiten Seitenbereich und einem dazwischen angeordneten Zentralbereich, aufweisend zumindest eine Karkasslage mit einer Vielzahl von gummierten Festigkeitsträgern, die sich jeweils durch den ersten Seitenbereich, den zweiten Seitenbereich und den Zentralbereich der Reifenkarkasse erstrecken,
b) einen relativ zur Reifenkarkasse radial weiter außen liegenden Laufstreifen,
c) eine relativ zur Reifenkarkasse radial weiter innen liegende Reifeninnenschicht,
wobei zumindest ein Teil der gummierten Festigkeitsträger der Karkasslage bezogen auf die Umfangsrichtung im ersten Seitenbereich und im zweiten Seitenbereich einen Winkel im Bereich von 80° bis 90° einschließt und im Zentralbereich einen Winkel im Bereich von 5° bis 75° einschließt.

Die Umfangsrichtung kann insbesondere als eine Umlaufrichtung des Fahrzeugluftreifens bezeichnet werden. Dabei handelt es sich bei der Umlaufrichtung um die Richtung, in die der Fahrzeugluftreifen um eine Rotationsachse rotierbar ist.

Aus dem Stand der Technik sind Fahrzeugluftreifen bekannt. Die aus dem Stand der Technik bekannten Fahrzeugluftreifen weisen insbesondere eine Reifenkarkasse mit einem ersten Seitenbereich, einem zweiten Seitenbereich und einem dazwischen angeordneten Zentralbereich auf, wobei die Reifenkarkasse zumindest eine Karkasslage mit einer Vielzahl von gummierten Festigkeitsträgern, die sich jeweils durch den ersten Seitenbereich, den zweiten Seitenbereich und den Zentralbereich der Reifenkarkasse erstrecken, aufweist. Dabei schließt zumindest ein Teil der gummierten Festigkeitsträger der Karkasslage bezogen auf die Umfangsrichtung im ersten Seitenbereich und im zweiten Seitenbereich einen Winkel im Bereich von 80° bis 90° ein und im Zentralbereich einen Winkel im Bereich von 5° bis 75° ein.

Die gemäß dem Stand der Technik in Fahrzeugluftreifen angeordneten Reifenkarkassen sind dabei insbesondere aus einer oder mehrerer Karkasslagen geformt, die jeweils eine Vielzahl von gummierten, das heißt in einer vernetzten Kautschukmischung eingebetteten, Festigkeitsträgern umfassen.

Bei einer radialen Richtung eines Fahrzeugluftreifens handelt es sich um eine Richtung die senkrecht auf der Rotationsachse des Fahrzeugluftreifens steht. Eine radiale Richtung verläuft parallel zu einem Radius eines Luftreifens. Der Radius eines Fahrzeugluftreifens ist der Radius des Kreises, dessen Form der Fahrzeugluftreifen in Umlaufrichtung grundsätzlich folgt, der Radius liegt rechtwinklig zu der Rotationsachse und rechtwinklig zu der Umlaufrichtung. Radial weiter außen bedeutet bezogen auf die Rotationsachse, dass eine erste Komponente des Fahrzeugluftreifens, die radial weiter außen liegt als eine zweite Komponente des Fahrzeugluftreifens, weiter von der Rotationsachse entfernt liegt als die zweite Komponente des Fahrzeugluftreifens. Radial weiter innen bedeutet bezogen auf die Rotationsachse, dass eine erste Komponente des Fahrzeugluftreifens, die radial weiter innen liegt als eine zweite Komponente des Fahrzeugluftreifens, näher zu der Rotationsachse liegt als die zweite Komponente des Fahrzeugluftreifens.

In einem aus dem Stand der Technik bekannten, sogenannten Radialreifen verlaufen die gummierten Festigkeitsträger der Karkasslagen im Wesentlichen radial. Dies bedeutet, dass die gummierten Festigkeitsträger über eine gesamte Breite der Karkasse quer zur Umfangsrichtung des Fahrzeugluftreifens mit der Umfangsrichtung einen Winkel von etwa 90° einschließen. Der entsprechende Winkel kann auch als Kordwinkel der in der Karkasslage vorhandenen Festigkeitsträger bezeichnet werden. Anhand der Definition dieses Kordwinkels in Abhängigkeit von der Umfangsrichtung, ist es für den Fachmann in der Praxis insbesondere möglich, den Kordwinkel, also den relativen Winkel des Festigkeitsträgers zur Umfangsrichtung, zu bestimmen.

Die Karkasse des erfindungsgemäßen Fahrzeugluftreifens weist drei Bereiche auf: einen ersten Seitenbereich, einen Zentralbereich und einen zweiten Seitenbereich. Hierbei kann der Zentralbereich zweckmäßigerweise der Bereich der Reifenkarkasse sein, der im Fahrzeugluftreifen unterhalb des Laufstreifens angeordnet ist, wohingegen der erste und zweite Seitenbereich beispielsweise die Karkasse im Bereich der Flanken oder Seiten des Fahrzeugluftreifens bilden.

Der Zentralbereich liegt radial weiter innen als der Laufstreifen.

Erfindungsgemäß wird im Fahrzeugluftreifen nämlich von einer streng radialen Konstruktion abgewichen, indem nämlich lediglich in dem ersten und zweiten Seitenbereich eine weitgehend radiale Anordnung der Festigkeitsträger, also mit einem Kordwinkel von 80° bis 90°, eingestellt wird. Innerhalb des Zentralbereichs der Karkasse wird hingegen ein Kordwinkel im Bereich von 5° bis 75° eingestellt, so dass eine Reifenkarkasse erhalten wird, die als teilweise gewinkelte Reifenkarkasse bezeichnet werden kann. Ein Kordwinkel von 5° bis 75° bedeutet, dass die gummierten Festigkeitsträger der Reifenkarkasse einen Winkel von 5° bis 75° mit der Umfangsrichtung oder der Umlaufrichtung einschließen.

Diese aus dem Stand der Technik bekannten Fahrzeugluftreifen, bei denen Innerhalb des Zentralbereichs der Karkasse Kordwinkel im Bereich von 5° bis 75° eingestellt sind, weisen eine grundsätzlich ausreichende mechanische Stabilität auf. Grundsätzlich ausreichend stabil bedeutet insbesondere, dass der Fahrzeugluftreifen den Beanspruchungen während eines regulären Betriebs des Fahrzeugluftreifens standhalten kann.

Bei diesen aus dem Stand der Technik bekannten Fahrzeugluftreifen könnte aber beispielsweise die Nutzung des Fahrzeugluftreifens in einem irregulären Betrieb zu einer unerwünschten Schädigung des Fahrzeugluftreifens führen. Bei einem regulären Betrieb handelt es sich insbesondere um einen Betrieb auf Fahrbahnen mit jeweiligen Fahrbahnbeschaffenheit bei Abrollgeschwindigkeiten, für die der Fahrzeugluftreifen technisch ausgelegt und vorgesehen ist. Bei einem irregulären Betrieb könnte der Fahrzeugluftreifen derartigen Beanspruchungen ausgesetzt werden, die zu einer Schädigung des Fahrzeugluftreifens führen könnten oder die zu einer Beeinträchtigung der Fahreigenschaften des Fahrzeugluftreifens führen könnten.

Der Erfindung liegt daher die Aufgabe zugrunde einen Fahrzeugluftreifen bereitzustellen, der eine über die grundsätzlich ausreichende mechanische Stabilität hinausgehende Stabilität aufweist.

Gelöst wird die erfindungsgemäß gestellte Aufgabe dadurch, dass zwischen der Reifenkarkasse und der Reifeninnenschicht eine Stützvorrichtung angeordnet ist.

Die Stützvorrichtung ist zur mechanischen Stabilisierung und Stützung des Reifens vorgesehen und kann insbesondere mögliche mechanische Beschädigungen des Fahrzeugluftreifens ausgleichen.

Durch den erfindungsgemäßen Umstand, wonach, zwischen der Reifenkarkasse und der Reifeninnenschicht eine Stützvorrichtung angeordnet ist kann insbesondere der Bereich der Karkasse unmittelbar unterhalb des Laufstreifens mechanisch gestützt werden.

Somit wird ein verbesserter Fahrzeugluftreifen bereitgestellt.

Bei dem Fahrzeugluftreifen handelt es sich beispielsweise um einen PKW-Reifen oder einen LKW-Reifen oder einen Zweirad-Reifen ist.

Weitere vorteilhafte Ausgestaltungsformen der vorliegenden Erfindung sind Gegenstand der Unteransprüche.

Gemäß einer vorzugsweisen Ausgestaltungsform der vorliegenden Erfindung schließt zumindest ein Teil der gummierten Festigkeitsträger der Karkasslage bezogen auf die Umfangsrichtung des Fahrzeugluftreifens im ersten Seitenbereich und im zweiten Seitenbereich einen Winkel im Bereich von 85° bis 90°, bevorzugt im Bereich von 88° bis 90°, ein. Bei diesem Winkel handelt es sich um den Winkel der gummierten Festigkeitsträger zu der Umfangsrichtung.

Gemäß einer nächsten vorzugsweisen Ausgestaltungsform der vorliegenden Erfindung schließt zumindest ein Teil der gummierten Festigkeitsträger der Karkasslage bezogen auf die Umfangsrichtung des Fahrzeugluftreifens im Zentralbereich einen Winkel im Bereich von 10° bis 70°, bevorzugt im Bereich von 15° bis 55°, besonders bevorzugt im Bereich von 20° bis 35°, ein. Bei diesem Winkel handelt es sich um den Winkel der gummierten Festigkeitsträger zu der Umfangsrichtung.

Gemäß einer nächsten vorzugsweisen Ausgestaltungsform der vorliegenden Erfindung ist der Laufstreifen in radial nach außen weisender Richtung zumindest teilweise, bevorzugt vollständig, oberhalb des Zentralbereichs angeordnet.

Gemäß einer nächsten vorzugsweisen Ausgestaltungsform der vorliegenden Erfindung liegt der Quotient aus der Breite der Aufstandsfläche und der Breite des Zentralbereichs, jeweils quer zur Umfangsrichtung des Fahrzeugluftreifens, im Bereich von 0,7 bis 2, bevorzugt im Bereich von 0,8 bis 1,6, besonders bevorzugt im Bereich von 0,9 bis 1,2 und ganz besonders bevorzugt im Bereich von 0,95 bis 1,05.

Bei einer Erstreckung quer zur Umfangsrichtung handelt es sich um eine Erstreckung parallel zu der Rotationsachse und rechtwinklig zu der Umfangsrichtung.

Gemäß einer nächsten vorzugsweisen Ausgestaltungsform der vorliegenden Erfindung umfasst die Reifenkarkasse zwei oder mehr Karkasslagen, wobei in jeder Karkasslage zumindest ein Teil der gummierten Festigkeitsträger, bevorzugt sämtliche gummierten Festigkeitsträger, bezogen auf die Umfangsrichtung des Fahrzeugluftreifens im ersten Seitenbereich und im zweiten Seitenbereich einen Winkel im Bereich von 80° bis 90° und im Zentralbereich einen Winkel im Bereich von 5° bis 75° einschließt. Bei diesem Winkel handelt es sich um den Winkel der gummierten Festigkeitsträger zu der Umfangsrichtung.

Gemäß einer nächsten vorzugsweisen Ausgestaltungsform der vorliegenden Erfindung umfasst die Reifenkarkasse zwei Karkasslagen, wobei die gummierten Festigkeitsträger der beiden Karkasslagen im Zentralbereich relativ zueinander einen Winkel im Bereich von 30° bis 90°, bevorzugt im Bereich von 40° bis 80°, besonders bevorzugt im Bereich von 50° bis 70°, ganz besonders bevorzugt im Bereich von 55° bis 65°, einschließen.

Durch den erfindungsgemäßen Umstand, wonach umfasst die Reifenkarkasse zwei Karkasslagen umfasst, wobei die gummierten Festigkeitsträger der beiden Karkasslagen im Zentralbereich relativ zueinander einen Winkel im Bereich von 30° bis 90°, bevorzugt im Bereich von 40° bis 80°, besonders bevorzugt im Bereich von 50° bis 70°, ganz besonders bevorzugt im Bereich von 55° bis 65°, einschließen wird ein Kreuzverband der beiden Karkasslagen bewirkt. Dieser Kreuzverband führt zu einer Erhöhung der mechanischen Stabilität des Fahrzeugluftreifens.

Gemäß einer nächsten vorzugsweisen Ausgestaltungsform der vorliegenden Erfindung ist im Fahrzeugluftreifen zwischen dem Laufstreifen und der Reifenkarkasse zumindest eine weitere Lage, bevorzugt genau eine weitere Lage, angeordnet.

Bei der weiteren Lage kann es sich beispielsweise um einen Gürtel des Fahrzeugluftreifens oder um eine Cap Ply des Fahrzeugluftreifens handeln.

Gemäß einer nächsten vorzugsweisen Ausgestaltungsform der vorliegenden Erfindung ist zumindest eine der weiteren Lagen eine Gürtellage, wobei die weitere Lage bevorzugt gummierte Festigkeitsträger umfasst, die besonders bevorzugt bezogen auf die Umfangsrichtung des Fahrzeugluftreifens einen Winkel im Bereich von 10° bis 70°, weiter bevorzugt im Bereich von 15° bis 55°, noch weiter bevorzugt im Bereich von 20° bis 35°, einschließen. Bei diesem Winkel handelt es sich um den Winkel der gummierten Festigkeitsträger zu der Umfangsrichtung.

Gemäß einer nächsten vorzugsweisen Ausgestaltungsform der vorliegenden Erfindung ist zumindest eine der weiteren Lagen eine Cap-Ply Lage, wobei die weitere Lage bevorzugt gummierte Festigkeitsträger umfasst, die besonders bevorzugt bezogen auf die Umfangsrichtung des Fahrzeugluftreifens einen Winkel im Bereich von 0° bis 5° einschließen.

Gemäß einer nächsten vorzugsweisen Ausgestaltungsform der vorliegenden Erfindung ist die Stützvorrichtung aus einer Silica-Gummimischung und/oder aus einer Naturkautschukmischung und/oder Ruß und/oder Butadien-Kautschuk ausgebildet. Für den Fall, wonach die Stützvorrichtung zumindest teilweise aus einer Silica-Gummimischung ausgebildet ist, handelt es sich insbesondere um einen Kieselsäure-Anteil von mindestens 3 phr. phr bedeutet per hundred rubber, also, dass auf Einhundert Teile Gummi drei Teile Kieselsäure kommen.

Gemäß einer nächsten vorzugsweisen Ausgestaltungsform der vorliegenden Erfindung ist die Stützvorrichtung konkavkonvex gewölbt, derart, dass eine konvex gebogene Oberfläche nach axial außen gerichtet ist. Eine konkavkonvexe Wölbung kann auch als mondsichelförmig bezeichnet werden.

Gemäß einer nächsten vorzugsweisen Ausgestaltungsform der vorliegenden Erfindung beträgt ein Radius eines konkaven, axial nach innen gerichteten Bogens eines Bereichs der Stützvorrichtung im Normalbetrieb zwischen 15 mm und 65 mm und im Notlaufzustand zwischen 2 mm und 15 mm, vorzugsweise zwischen 6 mm und 15 mm beträgt.

Der Fahrzeugluftreifen weit eine Reifenmittenebene auf. Die Reifenmittenebene stellt eine Symmetrieebene des Fahrzeugluftreifens dar. Der physikalische Schwerpunkt des Fahrzeugluftreifens liegt insbesondere in der Reifenmittenebene. Die Rotationsachse des Fahrzeugluftreifens steht senkrecht zu der Reifenmittenebene. Eine Axiale Ortsbestimmung oder Relation bezieht sich auf die Rotationsachse des Fahrzeugluftreifens. Axial nach innen gerichtet bedeutet gerichtet in eine Richtung parallel zu der Rotationsachse in Richtung der Reifenmittenebene. Ein erster Ort innerhalb des Fahrzeugluftreifens liegt axial weiter außen als ein zweiter Ort innerhalb des Fahrzeugluftreifens, wenn der erste Ort weiter von der Reifenmittenebene entfernt ist als der zweite Ort.

Eine radiale Ortsbestimmung oder Relation bezieht sich auf einen Radius des Fahrzeugluftreifens der senkrecht zu der Rotationsachse des Fahrzeugluftreifens steht. Der Fahrzeugluftreifen folgt grundsätzlich einer Kreisform mit einem Radius. Radial nach innen gerichtet bedeutet gerichtet in eine Richtung parallel zu einem Radius des Fahrzeugluftreifens in Richtung der Rotationsachse. Ein erster Ort innerhalb des Fahrzeugluftreifens liegt radial weiter außen als ein zweiter Ort innerhalb des Fahrzeugluftreifens, wenn der erste Ort weiter von der Rotationsachse entfernt ist als der zweite Ort.

Gemäß einer nächsten vorzugsweisen Ausgestaltungsform der vorliegenden Erfindung ist die Stützvorrichtung aus mindestens einer ersten Komponente und mindestens einer zweiten Komponente ausgebildet.

Gemäß einer nächsten vorzugsweisen Ausgestaltungsform der vorliegenden Erfindung ist die Stützvorrichtung aus mindestens zwei voneinander verschiedenen Komponenten ausgebildet. Dabei sind die mindestens zwei Komponenten beispielswiese hinsichtlich ihrer Form, ihrer Abmessungen oder ihres Materials voneinander verschieden.

Gemäß einer nächsten vorzugsweisen Ausgestaltungsform der vorliegenden Erfindung ist die Stützvorrichtung aus mindestens drei voneinander verschiedenen Komponenten ausgebildet. Dabei sind die mindestens drei Komponenten beispielswiese hinsichtlich ihrer Form, ihrer Abmessungen oder ihres Materials voneinander verschieden.

Gemäß einer nächsten vorzugsweisen Ausgestaltungsform der vorliegenden Erfindung sind die mindestens eine erste Komponente und die mindestens eine zweite Komponente axial nebeneinander angeordnet.

Gemäß einer nächsten vorzugsweisen Ausgestaltungsform der vorliegenden Erfindung sind die mindestens eine erste Komponente und die mindestens eine zweite Komponente radial nebeneinander angeordnet.

Gemäß einer nächsten vorzugsweisen Ausgestaltungsform der vorliegenden Erfindung ist die mindestens eine erste Komponente vollständig von der mindestens einen zweiten Komponente umgeben.

Gemäß einer nächsten vorzugsweisen Ausgestaltungsform der vorliegenden Erfindung ist die mindestens eine zweite Komponente vollständig von der mindestens einen ersten Komponente umgeben.

Weitere Vorteile, Merkmale und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung eines erfindungsgemäßen Fahrzeugluftreifens gemäß einer Ausführungsform;
Fig. 2: Eine schematische Darstellung eines Bereichs eines erfindungsgemäßen Fahrzeugluftreifens gemäß einer Ausführungsform;
Fig. 3: Eine schematische Darstellung eines erfindungsgemäßen Fahrzeugluftreifens gemäß einer weiteren Ausführungsform;
Fig. 4: Eine schematische Darstellung eines erfindungsgemäßen Fahrzeugluftreifens gemäß einer weiteren Ausführungsform;
Fig. 5: Eine schematische Darstellung gummierter Festigkeitsträger von zwei Karkasslagen einer Reifenkarkasse eines erfindungsgemäßen Fahrzeugluftreifens gemäß einer weiteren Ausführungsform;
Fig. 6: Eine schematische Darstellung eines erfindungsgemäßen Fahrzeugluftreifens gemäß einer weiteren Ausführungsform;
Fig. 7: Eine schematische Darstellung eines erfindungsgemäßen Fahrzeugluftreifens gemäß einer weiteren Ausführungsform;
Fig. 8: Eine schematische Darstellung eines erfindungsgemäßen Fahrzeugluftreifens gemäß einer weiteren Ausführungsform;
Fig. 9: Eine schematische Darstellung eines erfindungsgemäßen Fahrzeugluftreifens gemäß einer weiteren Ausführungsform;
Fig. 10: Eine schematische Darstellung eines erfindungsgemäßen Fahrzeugluftreifens gemäß einer weiteren Ausführungsform.

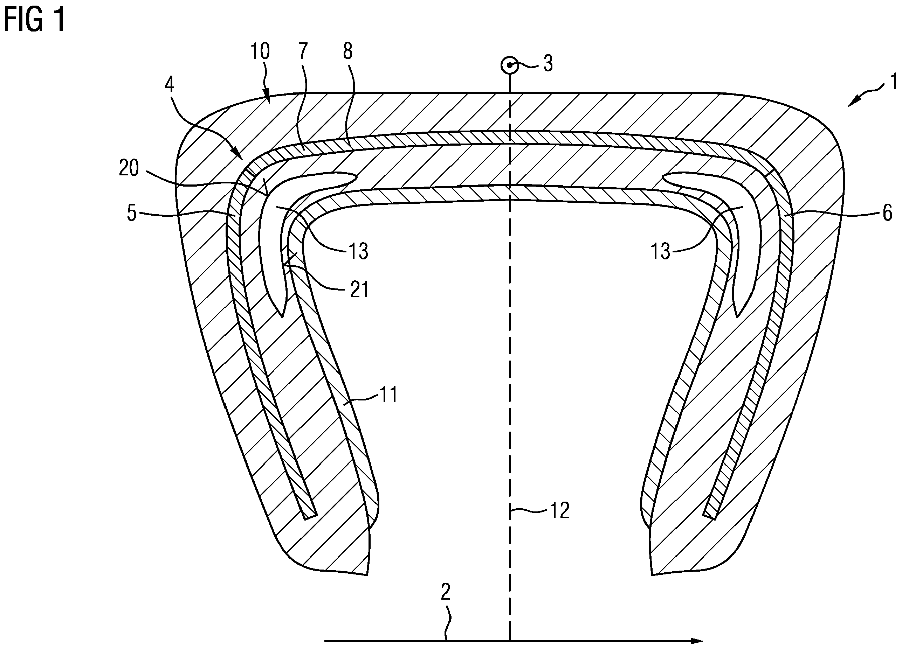

In der Figur 1 ist ein erfindungsgemäßer Fahrzeugluftreifen 1 gemäß einer Ausführungsform schematisch in Radialschnittansicht dargestellt. Der Fahrzeugluftreifen 1 ist um eine Rotationsachse 2 in eine Umlaufrichtung 3 rotierbar. Die Umlaufrichtung 3 kann auch als Umfangsrichtung bezeichnet werden.

Der Fahrzeugluftreifen 1 weist auf:
a) eine Reifenkarkasse 4 mit einem ersten Seitenbereich 5, einem zweiten Seitenbereich 6 und einem dazwischen angeordneten Zentralbereich 7, aufweisend zumindest eine Karkasslage 8 mit einer Vielzahl von in der Figur 1 nicht näher dargestellten gummierten Festigkeitsträgern 9, die sich jeweils durch den ersten Seitenbereich 5, den zweiten Seitenbereich 6 und den Zentralbereich 7 der Reifenkarkasse 4 erstrecken,
b) einen relativ zur Reifenkarkasse 4 radial weiter außen liegenden Laufstreifen 10,
c) eine relativ zur Reifenkarkasse 4 radial weiter innen liegende Reifeninnenschicht 11.

Der Fahrzeugluftreifen 1 weist eine Reifemittenebene 12 auf. Die Rotationsachse 2 steht senkrecht zu der Reifenmittenebene 12.

Zwischen der Reifenkarkasse 4 und der Reifeninnenschicht 11 ist eine Stützvorrichtung 13 angeordnet. Die Stützvorrichtung 13 folgt grundsätzlich einer Kreisform in Umlaufrichtung 3 mit insbesondere sichelförmigem oder mondsichelförmigem Querschnitt.

Gemäß der Darstellung in der Figur 1 ist die Stützvorrichtung 13 konkavkonvex gewölbt und zwar derart, dass eine konvex gebogene Oberfläche 20 nach axial außen gerichtet ist. Die konkav gebogene Oberfläche 21 ist nach axial innen gerichtet.

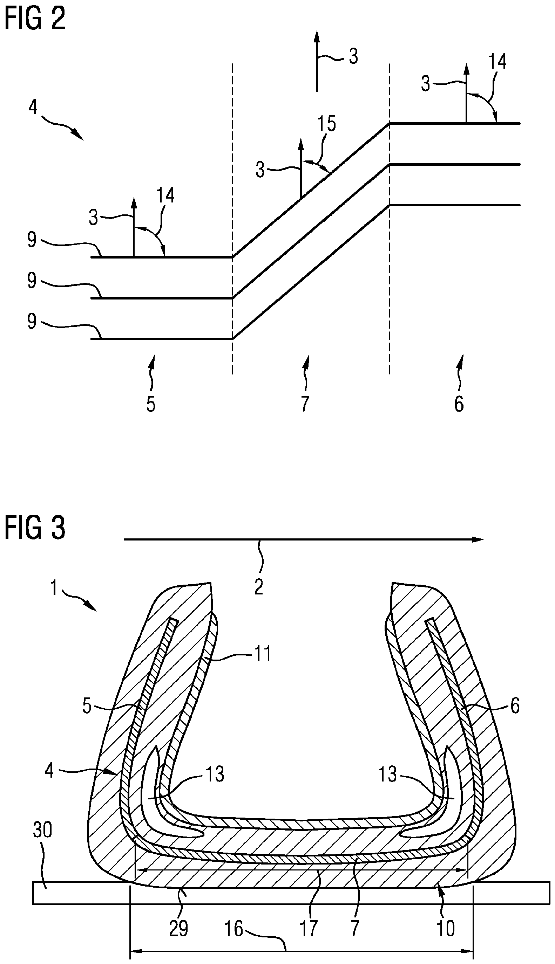

In der Figur 2 ist ein Bereich eines erfindungsgemäßen Fahrzeugluftreifens 1 schematisch dargestellt. Dargestellt ist die Reifenkarkasse 4. Gemäß der Darstellung in der Figur 2 schließt ein Teil der gummierten Festigkeitsträger 9 der Karkasslage 8 bezogen auf die Umfangsrichtung im ersten Seitenbereich 5 und im zweiten Seitenbereich 6 einen Winkel 14 im Bereich von 80° bis 90° einschließt und im Zentralbereich 7 einen Winkel 15 im Bereich von 5° bis 75° einschließt.

In der Figur 3 ist ein erfindungsgemäßer Fahrzeugluftreifen 1 gemäß einer weiteren Ausführungsform schematisch in Radialschnittansicht dargestellt, gemäß der Darstellung in der Figur 3 liegt der Quotient aus der Breite 16 der Aufstandsfläche 29 des Fahrzeugluftreifens 1 auf einer Fahrbahn 30 geteilt durch die Breite 17 des Zentralbereichs 7, jeweils quer zur Umfangsrichtung oder Umlaufrichtung 3, also parallel zur Rotationsachse 2, des Fahrzeugluftreifens 1, im Bereich von 0,7 bis 2, bevorzugt im Bereich von 0,8 bis 1,6, besonders bevorzugt im Bereich von 0,9 bis 1,2, ganz besonders bevorzugt im Bereich von 0,95 bis 1,05.

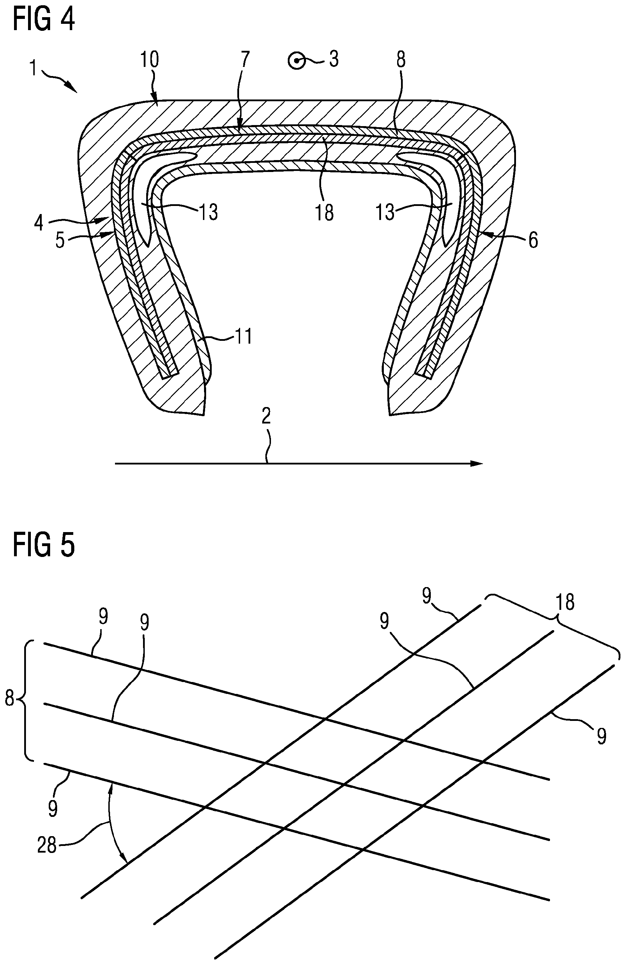

In der Figur 4 ist ein erfindungsgemäßer Fahrzeugluftreifen 1 ein Bereich gemäß einer weiteren Ausführungsform schematisch in Radialschnittansicht dargestellt.

Gemäß der Darstellung in der Figur 4 umfasst die Reifenkarkasse 4 zwei Karkasslagen 8 und 18.

In der Figur 5 sind gummierte Festigkeitsträger 9 entsprechend der in der Figur 4 dargestellten Ausführungsform schematisch dargestellt. Bei den in der Figur 5 dargestellten gummierten Festigkeitsträgern 9 handelt es sich um gummierte Festigkeitsträger 9 der Karkasslagen 8 und 18. Die gummierten Festigkeitsträger 9 der Karkasslage 8 verlaufen parallel zueinander. Die gummierten Festigkeitsträger 9 der Karkasslage 18 verlaufen parallel zueinander.

Die gummierten Festigkeitsträger 9 der beiden Karkasslagen 8, 18 im Zentralbereich 7 schließen relativ zueinander einen Winkel 28 im Bereich von 30° bis 90°, bevorzugt im Bereich von 40° bis 80°, besonders bevorzugt im Bereich von 50° bis 70°, ganz besonders bevorzugt im Bereich von 55° bis 65°, ein.

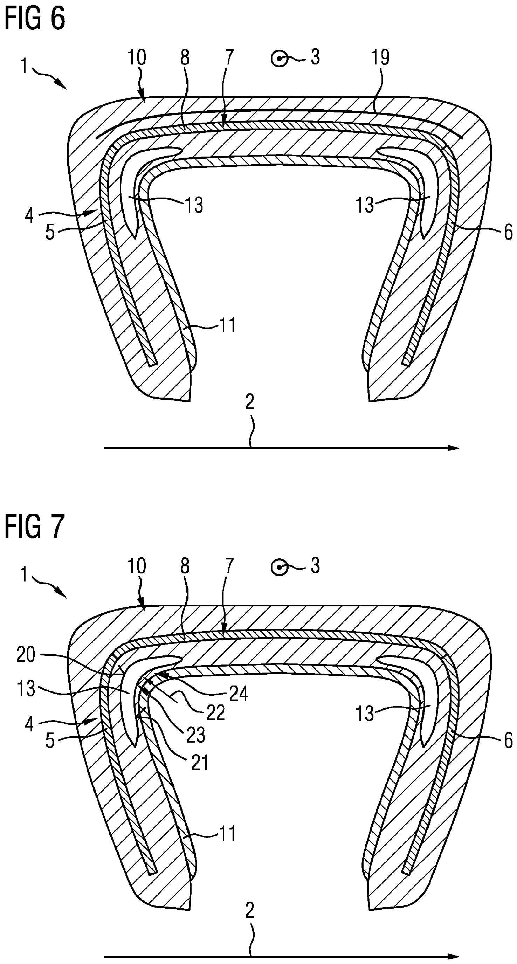

In der Figur 6 ist ein erfindungsgemäßer Fahrzeugluftreifen 1 gemäß einer weiteren Ausführungsform schematisch in Radialschnittansicht dargestellt. Gemäß der Darstellung in der Figur 6 ist zwischen dem Laufstreifen 10 und der Reifenkarkasse 4 zumindest eine weitere Lage 19, bevorzugt genau eine weitere Lage 19, angeordnet.

In der Figur 7 ist ein erfindungsgemäßer Fahrzeugluftreifen 1 gemäß einer weiteren Ausführungsform schematisch in Radialschnittansicht dargestellt. Gemäß der Darstellung in der Figur 7 beträgt ein Radius 22 eines konkaven, nach axial innen gerichteten Bogens 23 eines Bereichs 24 der Stützvorrichtung 13 im Normalbetrieb zwischen 15 mm und 65 mm und im Notlaufzustand zwischen 2 mm und 15 mm, vorzugsweise zwischen 6 mm und 15 mm. Die Stützvorrichtung weist eine konvex gebogene Oberfläche 20 und eine konkav gebogene Oberfläche 21 auf.

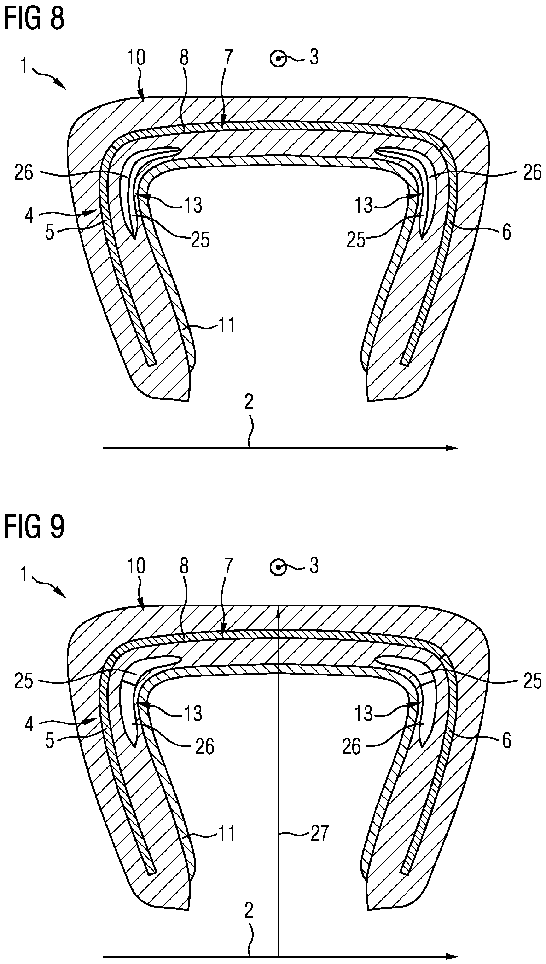

In der Figur 8 ist ein erfindungsgemäßer Fahrzeugluftreifen 1 gemäß einer weiteren Ausführungsform schematisch in Radialschnittansicht dargestellt. Gemäß der Darstellung in der Figur 8 ist die Stützvorrichtung 13 aus mindestens einer ersten Komponente 25 und mindestens einer zweiten Komponente 26 ausgebildet. Gemäß der Darstellung in der Figur 8 sind die mindestens eine erste Komponente 25 und die mindestens eine zweite Komponente 26 axial nebeneinander angeordnet.

In der Figur 9 ist ein erfindungsgemäßer Fahrzeugluftreifen 1 gemäß einer weiteren Ausführungsform schematisch in Radialschnittansicht dargestellt. Gemäß der Darstellung in der Figur 9 sind die mindestens eine erste Komponente und die mindestens eine zweite Komponente radial, also bezogen auf eines Radius 27 eines Kreises, dessen Form der Fahrzeugluftreifen 1 grundsätzlich folgt, nebeneinander angeordnet.

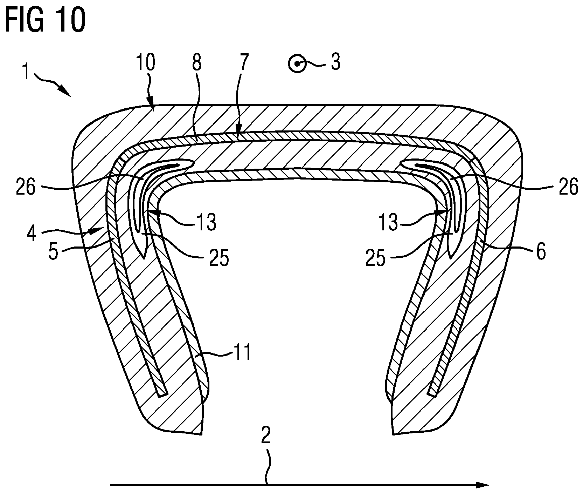

In der Figur 10 ist ein erfindungsgemäßer Fahrzeugluftreifen 1 gemäß einer weiteren Ausführungsform schematisch in Radialschnittansicht dargestellt. Gemäß der Darstellung in der Figur 10 ist die mindestens eine zweite Komponente 26 vollständig von der mindestens einen ersten Komponente 25 umgeben.

### Bezugszeichenliste

- 1: Fahrzeugluftreifen
- 2: Rotationsachse
- 3: Umlaufrichtung
- 4: Reifenkarkasse
- 5: Erster Seitenbereich
- 6: Zweiter Seitenbereich
- 7: Zentralbereich
- 8: Karkasslage
- 9: Gummierte Festigkeitsträger
- 10: Laufstreifen
- 11: Reifeninnenschicht
- 12: Reifenmittenebene
- 13: Stützvorrichtung
- 14: Winkel im ersten Seitenbereich oder im zweiten Seitenbereich
- 15: Winkel im Zentralbereich
- 16: Breite der Aufstandsfläche des Fahrzeugluftreifens
- 17: Breite des Zentralbereichs der Reifenkarkasse
- 18: Weitere Karkasslage
- 19: Weitere Lage
- 20: Konvex gebogene Oberfläche der Stützvorrichtung
- 21: Konkav gebogene Oberfläche der Stützvorrichtung
- 22: Radius eines konkaven, nach axial innen gerichteten Bogens eines Bereichs der Stützvorrichtung
- 23: Axial nach innen gerichteter Bogen eines Bereichs der Stützvorrichtung
- 24: Bereich der Stützvorrichtung
- 25: Erste Komponente der Stützvorrichtung
- 26: Zweite Komponente der Stützvorrichtung
- 27: Radius des Fahrzeugluftreifens
- 28: Winkel
- 29: Aufstandsfläche
- 30: Fahrbahn

## Patentansprüche

1. Fahrzeugluftreifen (1), aufweisend:
a) eine Reifenkarkasse (4) mit einem ersten Seitenbereich (5), einem zweiten Seitenbereich (6) und einem dazwischen angeordneten Zentralbereich (7), aufweisend zumindest eine Karkasslage (8) mit einer Vielzahl von gummierten Festigkeitsträgern (9), die sich jeweils durch den ersten Seitenbereich (5), den zweiten Seitenbereich (6) und den Zentralbereich (7) der Reifenkarkasse (4) erstrecken,
b) einen relativ zur Reifenkarkasse (4) radial weiter außen liegenden Laufstreifen (10),
c) eine relativ zur Reifenkarkasse (4) radial weiter innen liegende Reifeninnenschicht (11),
wobei zumindest ein Teil der gummierten Festigkeitsträger (9) der Karkasslage (8) bezogen auf die Umfangsrichtung (3) im ersten Seitenbereich (5) und im zweiten Seitenbereich (6) einen Winkel (14) im Bereich von 80° bis 90° einschließt und im Zentralbereich (7) einen Winkel (15) im Bereich von 5° bis 75° einschließt
**dadurch gekennzeichnet, dass** zwischen der Reifenkarkasse (4) und der Reifeninnenschicht (11) eine Stützvorrichtung (13) angeordnet ist.

2. Fahrzeugluftreifen (1) nach Anspruch 1, **dadurch gekennzeichnet, dass** zumindest ein Teil der gummierten Festigkeitsträger (9) der Karkasslage (8) bezogen auf die Umfangsrichtung (3) des Fahrzeugluftreifens (1) im ersten Seitenbereich (5) und im zweiten Seitenbereich (6) einen Winkel (14) im Bereich von 85° bis 90°, bevorzugt im Bereich von 88° bis 90°, einschließt.

3. Fahrzeugluftreifen (1) nach einem der Ansprüche 1 oder 2, **dadurch gekennzeichnet, dass** zumindest ein Teil der gummierten Festigkeitsträger (9) der Karkasslage (8) bezogen auf die Umfangsrichtung (3) des Fahrzeugluftreifens (1) im Zentralbereich (7) einen Winkel (15) im Bereich von 10° bis 70°, bevorzugt im Bereich von 15° bis 55°, besonders bevorzugt im Bereich von 20° bis 35°, einschließt.

4. Fahrzeugluftreifen (1) nach einem der vorhergehenden Ansprüche, **dadurch gekennzeichnet, dass** der Laufstreifen (10) in radial nach außen weisender Richtung zumindest teilweise, bevorzugt vollständig, oberhalb des Zentralbereichs (7) angeordnet ist.

5. Fahrzeugluftreifen (1) nach einem der vorhergehenden Ansprüche, **dadurch gekennzeichnet, dass** der Quotient aus der Breite (16) der Aufstandsfläche geteilt durch die Breite (17) des Zentralbereichs (7), jeweils quer zur Umfangsrichtung (3) des Fahrzeugluftreifens (1), im Bereich von 0,7 bis 2, bevorzugt im Bereich von 0,8 bis 1,6, besonders bevorzugt im Bereich von 0,9 bis 1,2, ganz besonders bevorzugt im Bereich von 0,95 bis 1,05, liegt.

6. Fahrzeugluftreifen (1) nach einem der vorhergehenden Ansprüche, **dadurch gekennzeichnet, dass** die Reifenkarkasse (4) zwei oder mehr Karkasslagen (8, 18) umfasst, wobei in jeder Karkasslage (8, 18) zumindest ein Teil der gummierten Festigkeitsträger (9), bevorzugt sämtliche gummierten Festigkeitsträger (9), bezogen auf die Umfangsrichtung (3) des Fahrzeugluftreifens (1) im ersten Seitenbereich (5) und im zweiten Seitenbereich (6) einen Winkel (14) im Bereich von 80° bis 90° und im Zentralbereich (7) einen Winkel (15) im Bereich von 5° bis 75° einschließt.

7. Fahrzeugluftreifen (1) nach dem vorhergehenden Anspruch, **dadurch gekennzeichnet, dass** die Reifenkarkasse (4) zwei Karkasslagen (8, 18) umfasst, wobei die gummierten Festigkeitsträger (9) der beiden Karkasslagen (8, 18) im Zentralbereich (7) relativ zueinander einen Winkel (28) im Bereich von 30° bis 90°, bevorzugt im Bereich von 40° bis 80°, besonders bevorzugt im Bereich von 50° bis 70°, ganz besonders bevorzugt im Bereich von 55° bis 65°, einschließen.

8. Fahrzeugluftreifen (1) nach einem der vorhergehenden Ansprüche, **dadurch gekennzeichnet, dass** im Fahrzeugluftreifen (1) zwischen dem Laufstreifen (10) und der Reifenkarkasse (4) zumindest eine weitere Lage (19), bevorzugt genau eine weitere Lage (19), angeordnet ist.

9. Fahrzeugluftreifen (1) nach einem der vorhergehenden Ansprüche, **dadurch gekennzeichnet, dass** die Stützvorrichtung (13) aus einer Silica-Gummimischung und/oder aus einer Naturkautschukmischung und/oder Ruß und/oder Butadien-Kautschuk ausgebildet ist.

10. Fahrzeugluftreifen (1) nach einem der vorhergehenden Ansprüche, **dadurch gekennzeichnet, dass** die Stützvorrichtung (13) konkavkonvex gewölbt ist, derart, dass eine konvex gebogene Oberfläche (20) nach axial außen gerichtet ist.

11. Fahrzeugluftreifen (1) nach einem der vorhergehenden Ansprüche, **dadurch gekennzeichnet, dass** ein Radius (22) eines konkaven, axial nach innen gerichteten Bogens (23) eines Bereichs (24) der Stützvorrichtung (13) im Normalbetrieb zwischen 15 mm und 65 mm und im Notlaufzustand zwischen 2 mm und 15 mm, vorzugsweise zwischen 6 mm und 15 mm beträgt.

12. Fahrzeugluftreifen (1) nach einem der vorhergehenden Ansprüche, **dadurch gekennzeichnet, dass** die Stützvorrichtung (13) aus mindestens einer ersten Komponente (25) und mindestens einer zweiten Komponente (26) ausgebildet ist.

13. Fahrzeugluftreifen (1) nach dem vorhergehenden Anspruch, **dadurch gekennzeichnet, dass** die mindestens eine erste Komponente (25) und die mindestens eine zweite Komponente (26) axial nebeneinander angeordnet sind.

14. Fahrzeugluftreifen (1) nach Anspruch 12, **dadurch gekennzeichnet, dass** die mindestens eine erste Komponente (25) und die mindestens eine zweite Komponente (26) radial nebeneinander angeordnet sind.

15. Fahrzeugluftreifen (1) nach Anspruch 12, **dadurch gekennzeichnet, dass** die mindestens eine erste Komponente (25) vollständig von der mindestens einen zweiten Komponente (26) umgeben ist oder die mindestens eine zweite Komponente (26) vollständig von der mindestens einen ersten Komponente (25) umgeben ist.
